# EUROPÄISCHE PATENTANMELDUNG

(11) **EP 1 002 985 A1**
(43) Veröffentlichungstag der Anmeldung: **24.05.2000**
(21) Anmeldenummer: 99122899.0
(22) Anmeldetag: 18.11.1999
(51) Int. Cl.: F16M 11/04

(54) **Aufhängeeinrichtung für Steuer- oder Überwachungsgeräte**

(30) Priorität: 21.11.1998 DE 19853781
(71) Anmelder: AlphaTec GmbH Maschinenbau, 06556 Artern (DE)
(72) Erfinder: Lehde, Andreas, Dipl.-Ing., 32369 Rahden (DE); Lehde, Martin, Dipl.-Ing., 32369 Rahden (DE)
(74) Vertreter: Elbertzhagen, Otto, Dipl.-Ing.

(57) **Zusammenfassung**

Eine solche Aufhängeeinrichtung hat zumindest einen auf Biegung und/oder Torsion beanspruchten Tragarm, der zwischen Befestigungs- und/oder Verbindungsgliedern (8) angeordnet ist und aus einem daran angesetzte Rohr (2) besteht. Zwecks Versteifung und verbesserter Einspannung ist das Rohr (2) von einem nahezu gleichlangen Außenrohr (3) mit Abstand umgeben, und die beiden Rohre (2, 3) sind mittels eines ihren Zwischenraum ausfüllenden Bindemittels (4) fest miteinander verbunden. Ferner haben die Befestigungs- und/oder Verbindungsglieder (8) eine Aufnahmevorrichtung (10) für das innere Rohr (2) und eine stirnseitige Anlagefläche (14) für die Stirnfläche (6) des Außenrohres (3), wobei das Aufnahmeende (5) des inneren Rohres (2) axial über die Stirnfläche (6) des Außenrohres (3) übersteht und an der Innenseite der Aufnahmevorrichtung (10) festlegbar ist.

## Beschreibung

Die Erfindung bezieht sich auf eine Aufhängeeinrichtung für Steuer- oder Überwachungsgeräte, insbesondere für Steuertafeln oder Monitore an Maschinen, mit zumindest einem auf Biegung und/oder Torsion beanspruchten Tragarm, der zwischen Befestigungs- und/oder Verbindungsgliedern angeordnet ist und aus einem daran angesetzen Rohr besteht.

Bei solchen Aufhängeeinrichtungen stellt bei den gegebenenen Abmessungen die Steifigkeit des Systems ein besonderes Problem dar, denn es soll vermieden werden, daß die Steuer- oder Überwachungsgeräte, die am freien Ende des aus einem oder mehreren Tragarmen gebildeten Traggerüstes angehängt sind, beim Betätigen oder aufgrund sonstiger Erschütterungen in größere Schwingungen versetzt werden. Bei den kurzbauenden Befestigungs- und/oder Verbindungsgliedern der Aufhängeeinrichtung tritt gewöhnlich nur eine vernachlässigbare Elastizität auf, weswegen im wesentlichen die Biege- und die Torsionsfestigkeit des einen oder der mehreren Tragarme die Elastizität des gesamten Aufhängesystems bedingen. Schon aus Gründen der Gewichtseinsparung können die die Tragarme bildenden Rohre nicht mit beliebig dicken Wandungen ausgeführt werden, außerdem kann man aus optischen Gründen den Rohrdurchmesser nicht beliebig vergrößern.

Deshalb hat man bei der aus der EP 0 822 367 A1 bekannten Aufhängevorrichtung für Steuergehäuse, Steuertafeln und dergl. in einem den Tragarm bildenden Hohlprofil eine die Steifigkeit der Aufhängevorrichtung verbessernde Spannstrebe vorgesehen, die beidendig mit den Verbindungsgliedern an den Enden des Spannarms so verbunden ist, daß in der Spannstrebe eine Zugspannung und an den Stirnseiten des Tragarmprofils eine Druckspannung entsteht. Eine unmittelbare formschlüssige Abstützung der Spannstrebe an dem Tragarmprofil ist hierbei nicht vorgesehen.

Des weiteren ist aus der DE 39 43 333 A1 ein Hohlkammerprofil bekannt, In welches ein Armierungsprofil eingebracht ist. In dem Spalt zwischen der inneren Oberfläche des Hohlkammerprofils und der äußeren Oberfläche des Armierungsprofils ist ein aktivierbarer quellfähiger Stoff vorgesehen, der nach seiner Aktivierung den Spalt mindestens teilweise ausfüllt. Dieses Hohlkammerprofil ist vorwiegend für durchbiegende Fensterrahmen, Kabelkanäle und dergl. vorgesehen. Einen Hinweis darauf, die äußere Hohlkammer und die innere Armierung für eine zumindest einendige, biege- und torsionssteife Einspannung auszubilden, ist in dem genannten Dokument nicht offenbart.

Der Erfindung liegt die Aufgabe zugrunde, eine Aufhängeeinrichtung der eingangs genannten Art zu schaffen, bei der das den Tragarm bildende Rohr konstruktionsmäßig versteift und nach dem Einführen in die Befestigungs- und Verbindungsglieder daran verspannbar ist.

Diese Aufgabe wird bei einer Aufhängeeinrichtung der gattungsbildenden Art nach der Erfindung zum einen dadurch gelöst, daß das den Tragarm bildende Rohr von einem nahezu gleichlangen Außenrohr mit Abstand umgeben ist und diese beiden Rohre mittels eines ihren Zwischenraum ausfüllenden Bindemittels fest miteinander verbunden sind. Zum anderen haben die Befestigungs- und/oder Verbindungsglieder eine Aufnahmevorrichtung für das innere Rohr und eine stirnseitige Anlagefläche für die Stirnfläche des Außenrohres, wobei das Aufnahmeende des inneren Rohres axial über die Stirnfläche des Außenrohres übersteht und an der Innenseite der genannten Aufnahmevorrichtung festlegbar ist.

Für die Erfindung ist wesentlich, daß das innere Rohr und das Außenrohr des jeweiligen Tragarms aufgrund einer festen Verbundkonstruktion miteinander versteift sind, wozu eine sichere Verbindung des inneren Rohres und des Außenrohres über deren Abstand hinweg durch das Bindemittel besteht. So können die in der Gebrauchslage auf das innere, eingespannte Rohr einwirkenden Biege- und Torsionskräfte zu einem erheblichen Anteil auf das Außenrohr abgeleitet werden, wodurch innerhalb des Verbundes eine Sperrwirkung erzielt wird, mit der man eine hohe Steifigkeit des gesamten Verbundes erzielt. Das Außenrohr umgibt das innere Rohr auf dessen nahezu gesamter Länge, um mit seiner Stirnfläche an der stirnseitigen Anlagefläche der Aufnahmevorrichtung der Befestigungs- und/oder Verbindungsglieder anliegen zu können, während das etwas längere innere Rohr im Inneren dieser Aufnhamevorrichtung festlegbar ist.

Als leichtgewichtiges Bindemittel kommt zwischen dem inneren Rohr und dem Außenrohr zweckmäßig ein Kunststoff zum Einsatz. Vorteilhaft handelt es sich um ein schaumfähiges Kunststoffmaterial, welches man in den Zwischenraum zwischen dem inneren Rohr und dem Außenrohr einbringt und das dort expandiert, so daß es sich unter Druck an die Außenwandung des inneren Rohres sowie die Innenwandung des Außenrohres anlegt und sich mit dem Rohrwerkstoff verkrallt, bei dem es sich um Stahl, insbesondere Edelstahl, handelt. Der Verbundaufbau ermöglicht es, die Wandungen der beiden Rohre mit geringer Dicke, also so dünn auszuführen, wie es bei Verwendung eines einzigen Metallrohres gar nicht möglich wäre.

Die neue Aufhängeeinrichtung bietet in allen Belastungsrichtungen ein hohes Widerstandsmoment. Dies gilt für Belastungen in axialer Richtung, wenn der Tragarm hängend oder stehend angeordnet ist und auf ihn Zug- oder Druckkräfte einwirken. Ebenso widerstandsfähig ist der Tragarm in radialer Richtung bei waagerecht ausladender, kragender Anordnung, bei der er auf Biegung beansprucht ist. Ebenfalls in tangentialer Richtung besteht eine hohe Widerstandskraft gegen Torsionsbeanspruchungen. Vornehmlich trägt hierzu das Außenrohr bei, das vorzugsweise als Vierkantrohr ausgebildet ist. Besonders vorteilhaft ist, wenn der Zwischenraum zwischen dem Außenrohr und dem inneren Rohr mit dem Bindemittel lückenlos gefüllt ist. Dichte und Adhäsion des Bindemittels bewirken einen Kraft- und einen Formschluß, wodurch ein Verdrehen des inneren Rohres gegenüber dem Außenrohr unterbunden ist. Im Inneren des inneren Rohres können Kabel und sonstige Energie- und Steuerleitungen behinderungsfrei durchgeführt werden, die beiden aus Metall bestehenden Rohre bewirken eine gute Abschirmung gegen elektrische Störeinflüsse, zudem bietet das Bindemittel zwischen dem Außenrohr und dem inneren Rohr eine Wärme- bzw. Kälteisolation, auch hierdurch erhöht sich die Störsicherheit bei äußeren Temperaturschwankungen. So lassen sich bei der erfindungsgemäßen Aufhängeeinrichtung im Zusammenspiel mit den Aufnahmevorrichtungen der Befestigungs- und/oder Verbindungsglieder aufwendige Schutzarten bis hin zum Schwallwasser- und Strahlwasserschutz realisieren.

Weitere vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: den Endabschnitt eines Tragarms einer Aufhängeeinrichtung für ein Steuergerät, wobei dieser Endabschnitt in der oberen Hälfte in der Ansicht und in der unteren Hälfte im Schnitt wiedergegeben ist,
- Fig. 2: einen Querschnitt durch den Tragarm gemäß Figur 1,
- Fig. 3: ein Befestigungs- bzw. Verbindungsglied für den Tragarm nach Figur 1 im Schnitt mit dem darin eingesetzten Tragarmende teilweise in Ansicht und teilweise im Schnitt,
- Fig. 4: die Stirnansicht des Hohlkörpers des Befestigungs- bzw. Verbindungsgliedes nach Figur 3 ohne eingesetzten Tragarm,
- Fig. 5: die Seitansicht des Hohlkörpers gemäß Figur 4,
- Fig. 6: einen Längsschnitt durch den Hohlkörper gemäß den Figuren 4 und 5 und
- Fig. 7: eine Draufsicht auf das Ende des Tragarms gemäß Figur 1.

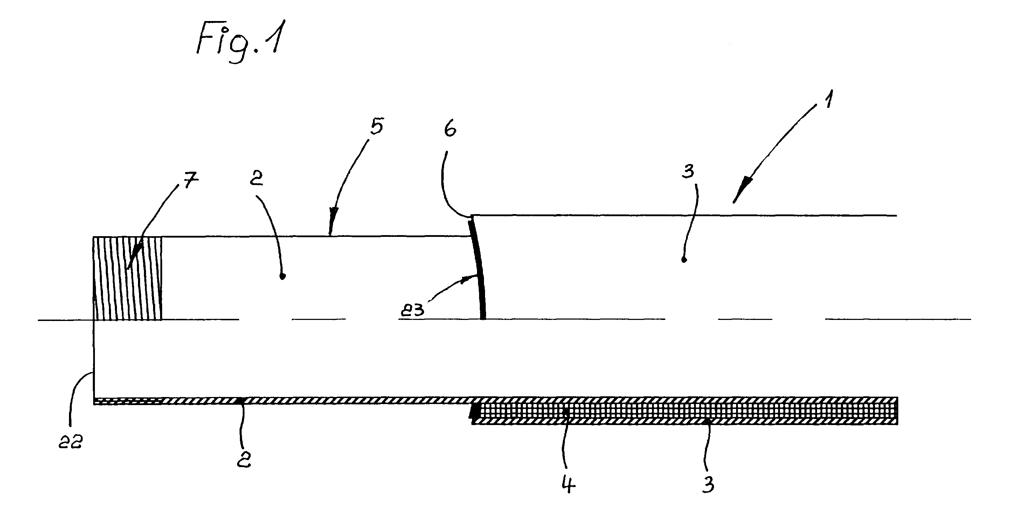

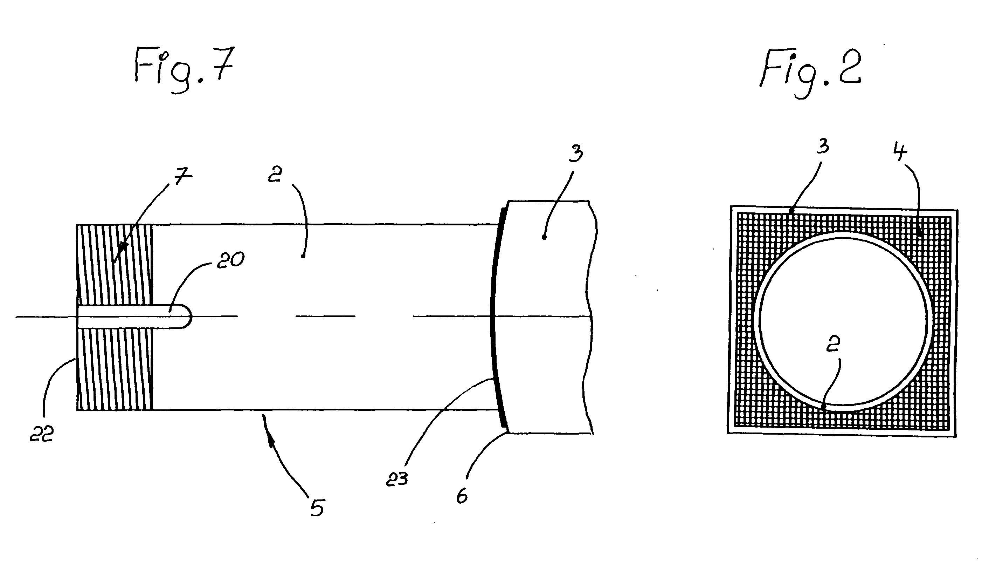

Im einzelnen erkennt man in Figur 1 das Ende eines Tragarms 1 für ein Aufhängesystem der in Rede stehenden Art. Der Tragarm 1 besteht aus einem Verbundelement, welches sich aus einem inneren Rohr 2 und einem äußeren Rohr 3 zusammensetzt, die beide aus dünnwandigem Stahl bestehen. Den Querschnitt des Rohrverbundes erkennt man in Figur 2. Das innere Rohr 2 hat einen kreisrunden Querschnitt, während das Außenrohr 3 im Querschnitt quadratisch ist, im Querschnitt aber auch kreisrund, oval oder rechteckig sein kann. Beide Rohre 2 und 3 sind koaxial miteinander angeordnet und haben an allen Stellen des Umfanges des inneren Rohres 2 einen Abstand voneinander. Der Zwischenraum zwischen dem inneren Rohr 2 und dem Außenrohr 3 ist mittels eines Bindemittels 4 ausgefüllt, welches eine feste Verbindung mit der Außenfläche des inneren Rohres 2 und der Innenfläche des Außenrohres 3 eingeht. Zweckmäßig handelt es sich bei dem Bindemittel 4 um ein Kunststoffmaterial, welches in den Zwischenraum zwischen dem inneren Rohr 2 und dem Außenrohr 3 eingegossen oder eingespritzt ist. In bevorzugter Ausführung wird hierfür ein zu einem Schaum expandierender, aushärtender Kunststoff verwendet, der sich mit dem Material der Rohrwandungen verkrallt.

Wie Figur 1 weiter zeigt, steht an den Enden des Tragarms 1 das innere Rohr 2 etwas über das Außenrohr 3 über, um ein Aufnahmeende 5 zu bilden, welches zum Einspannen des Tragarms 1 dient. Umlaufend um das innere Rohr 2 ist somit bei dem abgesetzten Außenrohr 3 eine schmale, ringförmige Stirnfläche 6 gebildet, die zum Verspannen des Tragarms 3 mit herangezogen werden kann. Dazu dient ferner ein Außengewinde 7, welches sich am Endbereich des Aufnahmeendes 5 des inneren Rohres 2 befindet.

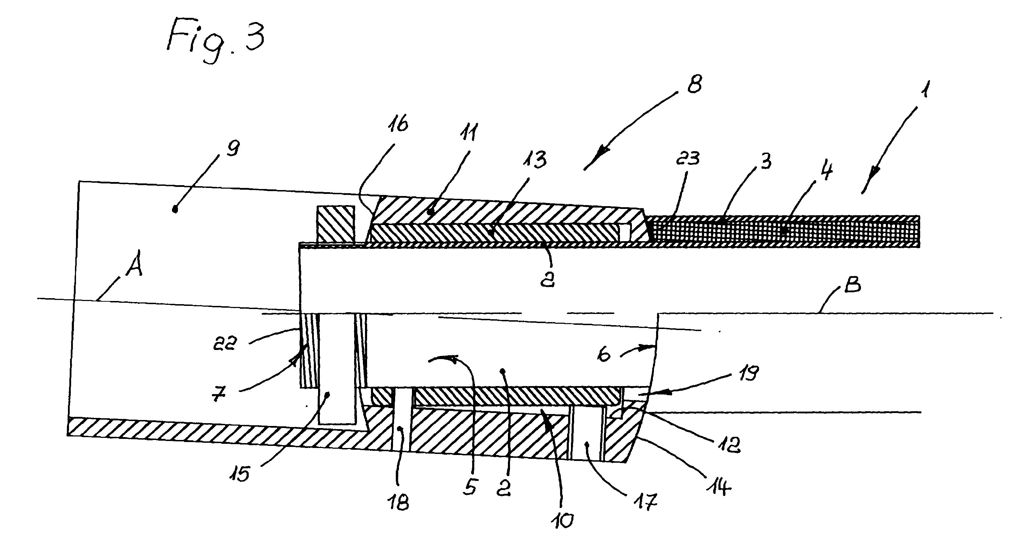

Figur 3 zeigt den Tragarm 1 in eingespannter Lage, dazu ist er beidendig in ein Befestigungs- bzw. Verbindungsglied 8 mit dem Aufnahmeende 5 seines inneren Rohres 2 eingesteckt. Von dem Befestigungs- bzw. Verbindungsglied 8, bei dem es sich um ein Wandgelenk, ein Aufsatzgelenk, ein Zwischengelenk oder um ein Verbindungselement bespielsweise am Gehäuse eines Steuergerätes handeln kann, ist lediglich der Aufnahmebereich für den Tragarm 1 wiedergegeben, welcher durch einen rohrförmigen Hohlkörper 9 gebildet ist. Dieser Hohlkörper 9 hat eine innere Aufnahmevorrichtung 10, die von einer Wandung 11 des Hohlkörpers 9 umschlossen wird, welche wiederum eine Aufnahmebohrung 12 umgibt. Am Ende des Hohlkörpers 9 verengt sich die Aufnahmebohrung 12 zu einer Durchtrittsöffnung 19 für das Aufnahmeende 5 des inneren Rohrs 2 des Tragarms 1. In der Aufnahmebohrung 12 der Aufnahmevorrichtung 10 im Hohlkörper 9 ist eine Aufnahmehülse 13 angeordnet, die das dünnwandige innere Rohr 2 des Tragarms 1 verstärkt, denn innerhalb der Aufnahmebohrung 2 des Hohlkörpers 9 kann das Aufnahmeende 5 des inneren Rohres 2 und damit der gesamte Tragarm 1 in einer gegenüber der Achse A der Aufnahmevorrichtung 10 gekippten Position abgestützt werden, wonach die Achse B des Tragarms 1 gegenüber der Achse A der Aufnahmevorrichtung 10 einen sehr spitzen Winkel von einigen Grad einnimmt. Dies dient dazu, um ins besondere bei nahezu horizontaler Ausrichtung des Tragarms 1 an dessen Einspannstelle einen geringen Aufrichtwinkel einzustellen, welche die unvermeidbare Durchbiegung auf der Gesamtlänge des Tragarms 1 kompensiert, um das abgelegene Tragarmende beispielsweise horizontal zu halten und nicht nach unten hin abkippen zu lassen. Die Aufnahmebohrung 12 der Aufnahmevorrichtung 10 im Hohlkörper 9 ist insbesondere zur endseitigen Durchtrittsöffnung 19 hin derart in radialer Richtung nach oben hin erweitert, um aus der mit der Aufnahmevorrichtung 10 koaxialen Lage heraus den Tragarm 1 etwas anheben zu können, wie es in Figur 3 angedeutet ist. Zur Abstützung der Aufnahmehülse 13 und damit des gesamten Tragarms 1 in einer hochgeschwenkten Position dient eine Stützschraube 17, die innenseitig im unteren Bereich der Aufnahmebohrung 12 vorsteht und in einer Gewindebohrung der Wandung 11 des Hohlkörpers 9 angeordnet ist. Die Stützschraube 17 dient sowohl zur Justage der Kipplage des Tragarms 1 als auch zur Ableitung der Lastkräfte, wozu zusätzlich das Verspannen des Tragarms 1 an dem Hohlkörper 9 vorgesehen ist.

In der jeweiligen Kipplage wird der Tragarm 1 mittels einer Mutter 15 gesichert, die auf das erwähnte Gewinde 7 am Aufnahmeende 5 des inneren Rohres 2 aufschraubbar ist. Hierbei wird die Stirnfläche 6 des Außenrohres 3 gegen eine Anschlagfläche 14 an der Stirnseite des Hohlkörpers 9 angezogen, wobei eine flächige Anlage in jeder der Kipplagen des Tragarms 1 erfolgt. Dazu ist die Anschlagfläche 14 am Hohlkörper 9 konvex gewölbt, und zwar in Höhenrichtung mit einem Radius, der durch das Kippzentrum für den Tragarm 1 hindurchgeht. Entsprechend der Wölbung der Anschlagfläche 14 am Hohlkörper 9 ist die Stirnfläche 6 des Außenrohres 3 des Tragarms 1 konkav gewölbt. Der Hohlkörper 9 hat eine in gleicher Weise konvex gewölbte Spannfläche 16 am Innenende seiner Wandung 11, gegen die sich in der Spannlage die auf das Gewinde 7 des Aufnahmeendes 5 des inneren Rohres 2 des Tragarms 1 aufgeschraubte Mutter 15 anlegt.

Der Tragarm 1 ist in dem Hohlkörper 9 des Befestigungs- bzw. bzw. Verbindungsgliedes 8 zugleich auch gegen Verdrehen gesichert. Dies ist schon deshalb notwendig, damit die Anschlagfläche 14 am Stirnende des Hohlkörpers 9 und die Stirnfläche 6 am Außenrohr 3 des Tragarms 1 konzentrisch miteinander passend in Anlage kommen können, denn diese beiden Flächen 14 und 6 sind lediglich in einer Richtung gewölbt. Zwecks Verdrehsicherung ist in die Wandung 11 des Hohlkörpers 9 ein Stift 18 eingesetzt, der in eine Nut 20 an der Außenseite des Aufnahmeendes 5 des inneren Rohres 2 des Tragarms 1 eingreift. Dies ist in Figur 7 ersichtlich. Die Nut 20 verläuft entlang einer Mantellinie des Aufnahmeendes 5 des inneren Rohres 2, also achsparallel zu diesem Aufnahmeende 5 und ist ebenfalls an dessen Stirnseite offen. So kann der Tragarm 1 mit dem Aufnahmeende 5 des inneren Rohres 2 voran in die Aufnahmevorrichtung 10 des Hohlkörpers 9 eingesteckt und bei lagerichtiger Ausrichtung mit der Nut 20 über den Stift 18 hinweggeschoben werden. Im übrigen zeigt Figur 7, wie am Verlauf der Dichtung 23 erkennbar, ein Außenrohr 3, welches einen kreisrunden Querschnitt hat.

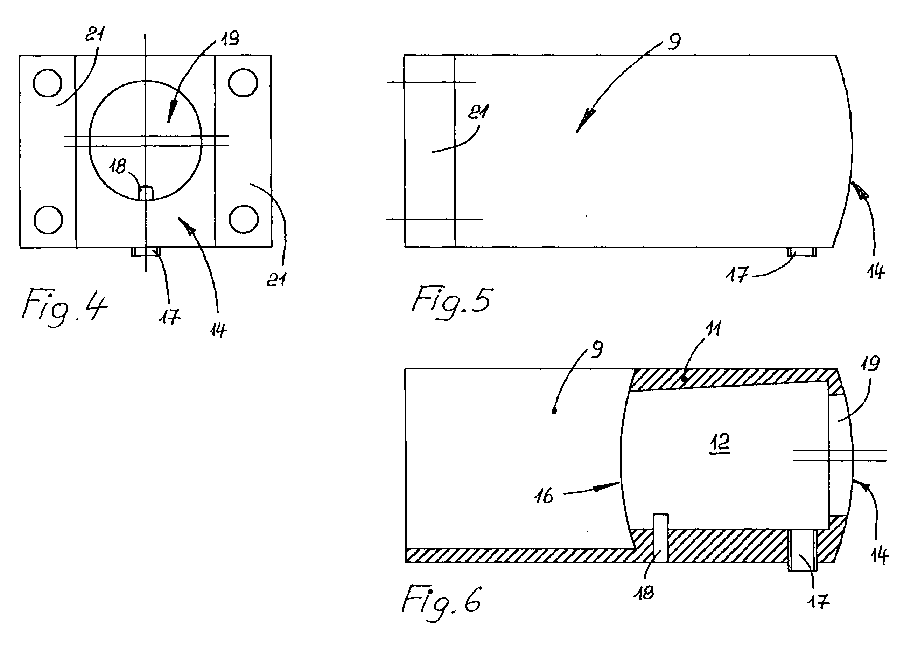

Die Einzelheiten des Hohlkörpers 9 des Befestigungs- bzw. Verbindungsgliedes 8 gehen ebenfalls aus den Figuren 4 bis 6 hervor. Insbesondere macht Figur 4 deutlich, daß die Durchtrittsöffnung 19 für das Aufnahmeende 5 am inneren Rohr 2 des Tragarms 1 oval ist, indem sie nach oben und unten hin durch einen halben Kreisbogen begrenzt ist und sich zwischen den beiden Kreisbögen gerade Begrenzungsabschnitte befinden. Der Außendurchmesser des Außenrohres 3 ist so bemessen, daß er in jeder Schwenklage des Aufnahmeendes 5 des inneren Rohres 2 die Durchtrittsöffnung 19 an der Stirnseite des Hohlkörpers 9 abdeckt. Deshalb ist gerade auch in der Schwenkrichtung der Durchmesser des Außenrohres 3 größer als der Durchmesser der Durchtrittsöffnung 19. Dabei ist noch dem Umstand Rechnung getragen daß sich, wie in Figur 3 ersichtlich, zwischen der Stirnfläche 6 am Außenrohr 3 und der Anschlagfläche 14 am Stirnende des Hohlkörpers 9 eine Dichtung 23 befindet, die auch noch in den beiden Schwenkendlagen des Tragarms 1 die Fuge zwischen der Stirnfläche 6 des Außenrohres 3 und der Anschlagfläche 14 des Hohlkörpers 9 abdichtet.

Im übrigen erkennt man in den Figuren 4 und 5 seitlich vorstehende Flansche 21 des Hohlkörpers 9, die zur Verschraubung mit dem nicht näher dargestellten Gehäuse des jeweiligen Befestigungs- bzw. Verbindungsgliedes 8 dienen. Figur 6 macht im Schnittbild des Hohlkörpers 9 ohne darin eingesetzter Aufnahmehülse 13 und ohne eingestecktem Aufnahmeende 5 am inneren Rohr 2 des Tragarms 1 die nach oben hin sich erweiternde Gestalt der Aufnahmebohrung 12 deutlich. Die Anbringung und Justage des Tragarms 1 am Hohlkörper 9 kann grundsätzlich in dessen an dem Befestigungs- bzw. Verbindungsglied 8 montierter Lage vorgenommen werden, was es erfordert, daß nach innen hin an die Aufnahmevorrichtung 10 anschließend der Hohlkörper 9 einseitig offen ist, damit eine Zugriffsmöglichkeit für das Aufsetzen und Betätigen der Sicherungsmutter 15, die auf das Gewinde 7 am Aufnahmeende 5 des inneren Rohres 2 aufzuschrauben ist, besteht. Ebenso kann aber auch der Tragarm 1 in seiner endgültigen Lage am Hohlkörper 9 vormontiert werden, der danach erst mittels der Flansche 21 mit den übrigen Teilen des Befestigungs- bzw. Verbindungsgliedes 8 verschraubt wird.

## Patentansprüche

1. Aufhängeeinrichtung für Steuer- oder Überwachungsgeräte, insbesondere für Steuertafeln oder Monitore an Maschinen, mit zumindest einem auf Biegung und/oder Torsion beanspruchten Tragarm, der zwischen Befestigungs- und/oder Verbindungsgliedern angeordnet ist und aus einem daran angesetzten Rohr besteht,
dadurch gekennzeichnet,
daß das Rohr (2) von einem nahezu gleichlangen Außenrohr (3) mit Abstand umgeben ist und die beiden Rohre (2, 3) mittels eines ihren Zwischenraum ausfüllenden Bindemittels (4) fest miteinander verbunden sind und daß die Befestigungs- und/oder Verbindungsglieder (8) eine Aufnahmevorrichtung (10) für das innere Rohr (2) und eine stirnseitige Anlagefläche (14) für die Stirnfläche des Außenrohres (3) haben, wozu das Aufnahmeende (5) des inneren Rohres (2) axial über die Stirnfläche (6) des Außenrohres (3) übersteht und an der Innenseite der Aufnahmevorrichtung (10) festlegbar ist.

2. Aufhängeeinrichtung nach Anspruch 1,
dadurch gekennzeichnet,
daß das Außenrohr (3) ein Vierkantrohr und das innere Rohr (2) ein Rundrohr ist und die beiden Rohre (2, 3) miteinander koaxial sind.

3. Aufhängeeinrichtung nach Anspruch 1 oder 2,
dadurch gekennzeichnet,
daß das Bindemittel (4) ein in den Zwischenraum zwischen dem inneren Rohr (2) und dem Außenrohr (3) eingebrachtes Kunststoffmaterial ist.

4. Aufhängeeinrichtung nach Anspruch 3,
dadurch gekennzeichnet,
daß das Bindemittel (4) ein in dem Zwischenraum zwischen dem inneren Rohr (2) und dem Außenrohr (3) expandierter Kunststoffschaum ist.

5. Aufhängeeinrichtung nach einem der Ansprüche 1 bis 4,
dadurch gekennzeichnet,
daß am Aufnahmeende (5) des inneren Rohres (2) ein Gewinde (7) für eine darauf aufschraubbare Sicherungsmutter (15) vorgesehen ist, für deren Abstützung am Innenende der Aufnahmevorrichtung (10) eine Spannfläche (16) vorgesehen ist.

6. Aufhängeeinrichtung nach einem der Ansprüche 1 bis 5 ,
dadurch gekennzeichnet,
daß die Aufnahmevorrichtung (10) Teil eines vom Befestigungs- bzw. Verbindungsglied (8) lösbaren Hohlkörpers (9) ist, an welchem die Anschlagfläche (14) für das Außenrohr (3) ausgebildet ist.

7. Aufhängeeinrichtung nach einem der Ansprüche 1 bis 6,
dadurch gekennzeichnet,
daß das Aufnahmeende (5) des inneren Rohres (2) innerhalb der Aufnahmevorrichtung (10) aus einer damit koaxialen Lage heraus um einen begrenzten Schwenkwinkel kippbar angeordnet und in jeder Kipplage fixierbar ist.

8. Aufhängeeinrichtung nach Anspruch 7,
dadurch gekennzeichnet,
daß die Anschlagfläche (14) am Befestigungs- bzw. Verbindungsglied (8) oder an dessen Hohlkörper (9) mit einem Radius zum Kippzentrum hin konvex gerundet ist.

9. Aufhängeeinrichtung nach Anspruch 8,
dadurch gekennzeichnet,
daß das Außenrohr (3) eine der konvex gerundeten Anschlagfläche (14) entsprechende, konkav gerundete Stirnfläche (6) hat.

10. Aufhängeeinrichtung nach Anspruch 9,
dadurch gekennzeichnet,
daß die innere Spannfläche (16) der Aufnahmevorrichtung (10) des Befestigungs- bzw. Verbindungsgliedes (8) oder dessen Hohlkörpers (9), an der in fixierter Lage des inneren Rohres (2) die auf dessen Gewinde (7) aufschraubbare Sicherungsmutter (15) anliegt, ebenfalls entsprechend dem Kippweg des inneren Rohres (2) gerundet ist.

11. Aufhängeeinrichtung nach einem der Ansprüche 7 bis 10,
dadurch gekennzeichnet,
daß die Aufnahmevorrichtung (10) eine entsprechend dem Kippweg des inneren Rohres (2) erweiterte Aufnahmebohrung (12) hat und radial hierzu in der Wandung (11) der Aufnahmevorrichtung (10) zumindest eine das Aufnahmeende (5) des inneren Rohres (2) in der jeweiligen Kipplage unterstützende, zustellbare Stützschraube (17) angeordnet ist.

12. Aufhängeeinrichtung nach Anspruch 11,
dadurch gekennzeichnet,
daß in die Aufnahmebohrung (12) der Aufnahmevorrichtung (10) eine Aufnahmehülse (13) eingesetzt ist, die kürzer als das Aufnahmeende (5) des inneren Rohres (2) ist und dieses in eingesteckter Lage spielfrei aufnimmt, wobei sich die Stützschraube (17) an dieser Aufnahmehülse (13) abstützt.

13. Aufhängeeinrichtung nach einem der Ansprüche 11 bis 16,
dadurch gekennzeichnet,
daß der Hohlkörper (9) stirnseitig eine in die Aufnahmevorrichtung (10) übergehende Durchtritssöffnung (19) für das innere Rohr (2) hat, die entsprechend dem Schwenkweg des inneren Rohres (2) gegenüber dem Außenumfang dieses Rohres (2) erweitert ist, wobei das Außenrohr (3) einen Durchmesser hat, der in der Schwenkrichtung größer als derjenige der Durchtrittsöffnung (19) in dieser Richtung ist.

14. Aufhängeeinrichtung nach einem der Ansprüche 9 bis 17,
dadurch gekennzeichnet,
daß in der Wandung (11) der Aufnahmevorrichtung (10) ein formschlüssig in das Aufnahmeende (5) des inneren Rohres (2) eingreifender Stift (18) als Verdrehsicherung angeordnet ist.

15. Aufhängeeinrichtung nach Anspruch 14,
dadurch gekennzeichnet,
daß an der Außenseite des Aufnahmeendes (5) des inneren Rohres (2) für den Eingriff des Stiftes (18) eine Nut (20) angeordnet ist, die achsparallel verläuft und an der freien Stirnseite (22) des inneren Rohres (2) offen ist.
